# EUROPÄISCHE PATENTSCHRIFT

(11) **EP 3 155 330 B1**
(45) Veröffentlichungstag und Bekanntmachung des Hinweises auf die Patenterteilung: **10.11.2021**
(21) Anmeldenummer: 15730393.4
(22) Anmeldetag: 12.06.2015
(51) Int. Cl.: F25B 21/02

(54) **KÜHL- UND/ODER GEFRIERGERÄT**
REFRIGERATOR AND/OR FREEZER
APPAREIL DE RÉFRIGÉRATION ET/OU DE CONGÉLATION

(30) Priorität: 16.06.2014 DE 102014008668; 20.01.2015 DE 102015000553; 20.05.2015 DE 102015006557
(43) Veröffentlichungstag der Anmeldung: 19.04.2017
(73) Patentinhaber: Liebherr-Hausgeräte Lienz GmbH, 9900 Lienz (AT); Liebherr-Hausgeräte Ochsenhausen GmbH, 88416 Ochsenhausen (DE)
(72) Erfinder: HIEMEYER, Jochen, 97753 Karlstadt (DE); KERSTNER, Martin, 97072 Würzburg (DE); FREITAG, Michael, 97082 Würzburg (DE)
(74) Vertreter: Herrmann, Uwe
(86) Internationale Anmeldenummer: PCT/EP2015/001194
(87) Internationale Veröffentlichungsnummer: WO 2015/192953

(56) Entgegenhaltungen:
- EP-A2- 0 592 044
- DE-B- 1 113 222
- GB-A- 2 331 838
- US-A- 5 653 111
- US-A- 5 715 684
- US-A1- 2010 146 991

## Beschreibung

Die vorliegende Erfindung betrifft ein thermoelektrisch gekühltes Kühl- und/oder Gefriergerät, mit wenigstens einem gekühlten Innenraum und mit wenigstens einem thermoelektrischen Element, insbesondere mit wenigstens einem Peltier-Element, das derart angeordnet ist, dass es in dem Innenraum Kälte- oder Wärme erzeugt.

Die relevanten Dokumente aus dem Stand der Technik sind die folgenden: US 5715684, EP 0592044, US 5653111, DE 1113222, GB 2331838 und US2010/146991.

Bei einem thermoelektrischen Kühl- bzw. Gefriergerät kann der Wärmeübergang von der gekühlten Innenseite zu dem thermoelektrischen Element und von dem thermoelektrischen Element zu der Außenseite des Gerätes ausschließlich auf Festkörperwärmeleitung basieren. Dazu werden Festkörper eingesetzt, die mit dem thermoelektrischen Element in wärmeleitender Verbindung stehen. Bei einem solchen Gerät ist der Wärmeübergang von den Festkörpern zu dem thermoelektrischen Element von großer Bedeutung. Kommt es zu einem Fehler in der Kontaktierung, kann dies zu einem Temperaturabfall an der Grenzfläche und damit zu einer ineffizienten Kälte- oder Wärmeerzeugung führen. Ein fester Verbund zwischen dem thermoelektrischen Element und dem Festkörper, z.B. über einen Wärmeleitkleber ist vorteilhaft.

Die vorliegende Erfindung ist offenbart im unabhängigen Anspruch 1. Weitere Ausführungsbeispiele sind offenbart in den abhängigen Ansprüchen.

Nach der Erfindung ist vorgesehen, dass das thermoelektrischen Element durch Spannung zwischen den beiden Festkörpern über in weiterer Folge näher beschriebene Verbindungselemente fixiert wird.

In einer bevorzugten Ausgestaltung ist vorgesehen, dass zur mechanischen Entlastung des thermoelektrischen Elements im Fertigungsprozess auf einer Seite eine dünne Graphitfolie als Kopplungselement angeordnet wird. Auf der anderen Seite wird der Wärmeleitkleber verwendet, auch um Fertigungstoleranzen bei den Dicken von thermoelektrischem Element, Festkörpern und Verbindungselementen auszugleichen. Vorzugsweise wird die Graphitfolie auf der Warmseite eingesetzt, da hier die höheren Wärmeströme fließen und der Wärmeübergangswiderstand durch die dünne Graphitfolie üblicherweise geringer ist als die durch Toleranzausgleich etwas dickere Wärmeleitkleberschicht.

Eine weitere Besonderheit besteht darin, dass Materialübergänge im Wärmetauscher, d.h. in dem Festkörper möglichst vermieden werden, da diese zu zusätzlichen Wärmeübergangswiderständen führen. Im Idealfall stellt der Wärmetauscher, d.h. einer der Festkörper, der beispielsweise aus Aluminium bestehen kann, der mit dem thermoelektrischen Element in Verbindung steht, die Außenhaut des Gerätes dar. Dies führt zu einer fertigungstechnischen Herausforderung bei der Kontaktierung des thermoelektrischen Elementes.

Zudem besteht eine steife Verbindung zwischen dem Innenbehälter und der Außenhaut über das thermoelektrische Element.

Kommt es zu thermischen Spannungen im Betrieb oder auch in der Herstellung des Behältnisses kann dies zu einer mechanischen Belastung und ggf. zum Bruch des thermoelektrischen Elementes führen.

Das wärmeisolierte Behältnis weist mindestens einen temperierten Innenraum auf, wobei dieser gekühlt ist, so dass sich in dem Innenraum eine Temperatur unterhalb der Umgebungstemperatur von z.B. 21 °C ergibt.

Es ist vorgesehen, dass das thermoelektrische Element zwischen zumindest zwei wärmeleitenden Festkörpern angeordnet bzw. aufgenommen ist, die mit zunehmendem Abstand zu dem thermoelektrischen Element eine zunehmende Querschnittsfläche aufweisen.

Die wenigstens zwei gut wärmeleitenden Festkörper stehen mit dem thermoelektrischen Element in wärmeleitendem Kontakt, so dass einer der Festkörper im Betrieb des thermoelektrischen Elementes die kalte Seite und der andere Festkörper im Betrieb des thermoelektrischen Elementes die warme Seite darstellt.

Die wenigstens zwei wärmeleitenden Festkörper bilden einen primären Wärmetauscher, der mit dem thermoelektrischen Element in Verbindung steht, so dass im Betrieb des thermoelektrischen Elementes einer der Festkörper die kalte Seite und einer der Festkörper die warme Seite bildet.

Dieser primäre Wärmetauscher steht vorzugsweise mit wenigstens einem sekundären Wärmetauscher wärmeleitend in Verbindung. Der sekundäre Wärmetauscher umfasst wenigstens einen und vorzugsweise zwei Festkörper. Dies Festkörper des sekundären Wärmetauschers können z.B. den Innenbehälter, d.h. die Wandung des gekühlten oder beheizten Innenraums bilden und/oder die Außenhülle des Kühl- und/oder Gefriergeräts.

Vorzugsweise bestehen die Festkörper des primären und/oder des sekundären Festkörpers aus Metall oder weisen Metall auf. In Betracht kommt beispielweise Aluminium.

Die Aufnahme des thermoelektrischen Elementes in dem primären Wärmetauscher, der durch die wenigstens zwei Festkörper gebildet wird, schützt dieses vor übermäßigen mechanischen Beanspruchungen.

Der primäre Wärmetauscher, der die Festkörper umfasst, zwischen denen das thermoelektrische Element angeordnet ist, hat eine sehr gute thermische Ankopplung der erzeugten Kälte sowie der Abwärme und bringt den Wärmestrom aufgrund seiner ansteigenden Querschnittsfläche auf eine vergleichsweise große Fläche, was den Vorteil mit sich bringt, dass bei einer weiteren Ankopplung an weitere Festkörper, wie z.B. an den oben genannten sekundären Wärmetauscher, ein möglichst geringer Wärmeverlust eintritt.

Vorzugsweise ist vorgesehen, dass das thermoelektrische Element derart zwischen den zwei wärmeleitenden Festkörpern aufgenommen ist, dass auf den oder die Festkörper einwirkende Kräfte nicht oder in verringertem Umfang auf das thermoelektrische Element übertragen werden.

Nach der Erfindung ist vorgesehen, dass das thermoelektrische Element zwischen den Festkörpern verspannt ist, die den primären Wärmetauscher bilden. Dabei ist vorgesehen, dass das oder die Verbindungselemente, die die Festkörper miteinander verbinden eine geringere Wärmeleitfähigkeit als die Festkörper aufweisen, so dass keine signifikante Wärmebrücke entsteht.

Dabei wird die Verspannung bzw. die Verbindung zwischen den Festkörpern somit vorzugsweise derart ausgeführt, dass die Wärmebrücke aufgrund der Verbindungsmittel, die die Festkörper verbinden, möglichst gering ist.

Es kann sich grundsätzlich um ein einziges Verbindungsmittel oder auch um zwei oder mehr Verbindungsmittel handeln.

Nach der Erfindung ist vorgesehen, die beiden Festkörper miteinander zu verspannen, d.h. die Festkörper zusammenzuziehen, so dass die Verbindungsmittel auf Zug beansprucht sind.

In einer Ausführungsform handelt es sich bei dem Verbindungsmittel um Abstandshalter. Es ist denkbar, dass das Verbindungsmittel so ausgeführt ist, dass dieses auf eine oder mehrere von Zug, Druck, Torsion und Scherung beansprucht wird.

In einer weiteren Ausgestaltung der Erfindung ist vorgesehen, dass einer der Festkörper wärmeleitend mit der Außenhaut des Gerätes und einer der Festkörper wärmeleitend mit der Innenwand des Gerätes in Verbindung steht. Diese Verbindung kann unmittelbar oder mittelbar sein, wobei eine unmittelbare Verbindung bevorzugt ist.

Nach der Erfindung ist vorgesehen, dass das Kühl- und/oder Gefriergerät als Wärmedämmung des Innenraums eine Vakuumdämmung aufweist, die den gekühlten Innenraum vollständig oder teilweise umgibt.

Nach der Erfindung befindet sich der primäre Wärmetauscher und/oder das thermoelektrische Element in der Dämmschicht, die sich zwischen der Innenwandung und der Außenwandung des Geräts befindet.

Die Wärmedämmung befindet sich zwischen der Außenhaut und dem Innenbehälter des Gerätes. Die Wärmedämmung kann z.B. eine oder mehrere Vakuumisolationspaneele aufweisen. Denkbar ist es auch, zur Wärmedämmung ein oder mehrere Hüllkörper aus einer vakuumdichten Umhüllung und insbesondere aus einer Hochbarrierefolie einzusetzen, die mit einem Stützmaterial, wie z.B. Perlit gefüllt sind. Die Hüllkörper sind geschlossene Gebilde, in denen Vakuum herrscht.

Besonders bevorzugt ist eine Ausführung, bei der zwischen der den Innenraum begrenzenden Innenwand und der Außenhaut eine Wärmedämmung angeordnet ist, die aus einem Vollvakuumsystem besteht. Darunter ist eine Wärmedämmung zu verstehen, die ausschließlich oder überwiegend aus einem evakuierten Bereich besteht, der mit einem Stützmaterial gefüllt ist. Die Begrenzung dieses Bereiches kann beispielsweise durch eine vakuumdichte Folie und vorzugsweise durch eine Hochbarrierefolie gebildet werden. Somit kann zwischen der Innenwand des Behältnisses, vorzugsweise Geräts und der Außenhaut des Behältnisses, vorzugsweise Gerätes, als Wärmedämmung ausschließlich ein solcher Folienkörper vorliegen, der einen durch eine vakuumdichte Folie umgebenen Bereich aufweist, in dem Vakuum herrscht und in dem ein Stützmaterial angeordnet ist. Vakuumisolationspaneele als Wärmedämmung außer dem Vollvakuumsystem zwischen der Innenseite und der Außenseite des Behältnisses bzw. Gerätes sind vorzugsweise nicht vorgesehen.

Diese bevorzugte Art der Wärmedämmung in Form eines Vollvakuumsystems kann sich zwischen der den Innenraum begrenzenden Wand und der Außenhaut des Korpus erstrecken.

Das Vollvakuumsystem kann so erhalten werden, dass eine Umhüllung aus einer gasdichten Folie mit einem Stützmaterial gefüllt und anschließend vakuumdicht versiegelt wird. In einer Ausführungsform erfolgt sowohl das Befüllen als auch das vakuumdichte Versiegeln der Umhüllung bei Normal- bzw. Umgebungsdruck. Die Evakuierung erfolgt dann durch Anschluss einer geeigneten in die Umhüllung eingearbeiteten Schnittstelle, beispielsweise eines Evakuierungsstutzens, der ein Ventil aufweisen kann, an eine Vakuumpumpe. Vorzugsweise herrscht während der Evakuierung außerhalb der Umhüllung Normal- bzw. Umgebungsdruck. Es ist in dieser Ausführungsform vorzugsweise zu keinem Zeitpunkt der Herstellung erforderlich, die Umhüllung in eine Vakuumkammer einzubringen. Insofern kann in einer Ausführungsform während der Herstellung der Vakuumdämmung auf eine Vakuumkammer verzichtet werden.

Unter einer vakuumdichten oder diffusionsdichten Umhüllung bzw. unter einer vakuumdichten oder diffusionsdichten Verbindung bzw. unter dem Begriff Hochbarrierefolie wird vorzugsweise eine Umhüllung bzw. eine Verbindung bzw. eine Folie verstanden, mittels derer der Gaseintrag in den Vakuumdämmkörper so stark reduziert ist, dass der durch Gaseintrag bedingte Anstieg in der Wärmeleitfähigkeit des Vakuumdämmkörpers über dessen Lebensdauer hinweg ausreichend gering ist. Als Lebensdauer ist beispielsweise ein Zeitraum von 15 Jahren, vorzugsweise von 20 Jahren und besonders bevorzugt von 30 Jahren anzusetzen. Vorzugsweise liegt der durch Gaseintrag bedingte Anstieg in der Wärmeleitfähigkeit des Vakuumdämmkörpers über dessen Lebensdauer bei < 100 % und besonders bevorzugt bei < 50 %.

Vorzugsweise ist die flächenspezifische Gasdurchgangsrate der Umhüllung bzw. der Verbindung bzw. der Hochbarrierefolie < 10-5 mbar * l / s *m² und besonders bevorzugt < 10-6 mbar * l / s *m² (gemessen nach ASTM D-3985). Diese Gasdurchgangsrate gilt für Stickstoff und Sauerstoff. Für andere Gassorten (insbesondere Wasserdampf) bestehen ebenfalls niedrige Gasdurchgangsraten vorzugweise im Bereich von < 10-2 mbar * l / s * m² und besonders bevorzugt im Bereich von < 10-3 mbar * l / s * m² (gemessen nach ASTM F-1249-90). Vorzugsweise werden durch diese geringen Gasdurchgangsraten die vorgenannten geringen Anstiege der Wärmeleitfähigkeit erreicht.

Ein aus dem Bereich der Vakuumpaneele bekanntes Hüllsystem sind sogenannte Hochbarrierefolien. Darunter werden im Rahmen der vorliegenden Erfindung vorzugsweise Ein- oder Mehrschichtfolien (die vorzugsweise siegelfähig sind) mit einer oder mehreren Barriereschichten (typischerweise metallische Schichten oder Oxid-Schichten, wobei als Metall oder Oxid vorzugsweise Aluminium bzw. ein Aluminiumoxid Verwendung findet) verstanden, die den oben genannten Anforderungen (Anstieg der Wärmeleitfähigkeit und/oder flächenspezifische Gasdurchgangsrate) als Barriere gegen den Gaseintrag genügen.

Bei den oben genannten Werten bzw. bei dem Aufbau der Hochbarrierefolie handelt es sich um exemplarische, bevorzugte Angaben, die die Erfindung nicht beschränken.

Nach der Erfindung ist vorgesehen, dass das thermoelektrische Element mit den Festkörpern mechanisch fest verspannt ist.

Vorzugsweise ist vorgesehen, dass das oder die Verbindungsmittel die wenigstens zwei wärmeleitenden Festkörper über eine Klemmverbindung verspannt.

Um die Wärmeleitung durch die Verbindungsmittel der Festkörper so gering wie möglich zu halten, ist es vorgesehen, dass die beiden Festkörper durch Verbindungsmittel miteinander verbunden und vorzugsweise verspannt werden, wobei die Verbindungsmittel eine geringere Wärmeleitfähigkeit aufweisen, als die Festkörper.

Vorzugsweise bestehen die Verbindungsmittel aus einem anderen Material als die Festkörper, die den primären und/oder sekundären Wärmetauscher bilden.

Nach der Erfindung ist es vorgesehen, dass die Verbindungsmittel aus Kunststoff bestehen oder Kunststoff aufweisen. In Betracht kommt beispielsweise Polyamid oder auch ein sonstiger Kunststoff.

In einer weiteren bevorzugten Ausgestaltung der Erfindung ist vorgesehen, dass die Verbindungsmittel den Abstand der wärmeleitenden Festkörper zueinander fixieren.

Wie oben ausgeführt, besteht eine bevorzugte Ausgestaltung der Erfindung darin, dass die Festkörper aus Metall und vorzugsweise aus Aluminium bestehen oder dieses aufweisen.

Das oder die Verbindungsmittel können in einem größtmöglichen Abstand zu dem thermoelektrischen Element angeordnet sein. Da die kritischsten Belastungen Verformungen am Gesamtgerät bzw. Behältnis sind, die über den steifen primären Wärmetauscher als Hebel auf das thermoelektrische Element abgeleitet werden, ist eine Stabilisierung an allen Seiten möglichst weit außerhalb des thermoelektrischen Elementes von Vorteil.

Vorzugsweise ist der Abstand der Verbindungsmittel zu dem thermoelektrischen Element größer als die Kantenlänge des thermoelektrischen Elementes.

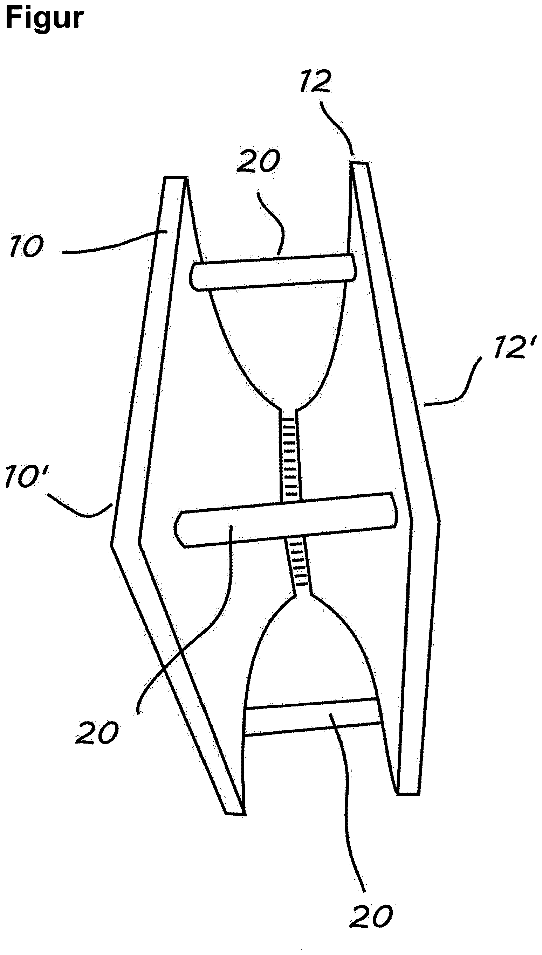

Weitere Einzelheiten und Vorteile der Erfindung werden anhand eines in der Zeichnung dargestellten Ausführungsbeispiels näher erläutert.

Die einzige Figur zeigt eine perspektivische Ansicht eines primären Wärmetauschers mit einem darin angeordneten thermoelektrischen Element. Dieses ist als Peltierelement ausgebildet.

Das thermoelektrische Element ist zwischen zwei gut wärmeleitenden Festkörpern 10, 12 eingespannt, wobei der Festkörper 10 beim Durchqueren der Dämmebene gemäß der Figur von links nach rechts im Querschnitt abnimmt und der Festkörper 12 beim Durchqueren der Dämmebene gemäß der Figur von links nach rechts im Querschnitt zunimmt.

Zwischen den beiden Festkörpern befindet sich das thermoelektrische Element. Die Festkörper können relativ zu einer durch das thermoelektrische Element verlaufenden Achse spiegelsymmetrisch angeordnet sein.

Die beiden Festkörper bilden einen primären Wärmetauscher. Dieser steht über die außenliegenden Flächen 10' und 12' der Festkörper 10, 12, die vorzugsweise eben ausgebildet sind, vorzugsweise mit wenigstens einem sekundären Festkörper bzw. Wärmetauscher in wärmeleitender Verbindung. Der sekundäre Wärmetauscher ist vorzugsweise unmittelbar an den Flächen 10'und 12' angeordnet.

Der sekundäre Wärmetauscher kann zwei oder mehr Festkörper aufweisen, die beispielsweise einerseits die Außenhaut des Behältnisses und andererseits die Innenwand des Behältnisses bilden oder mit diesen in Verbindung stehen. Die Innenwand begrenzt den beheizten oder gekühlte Innenraum des erfindungsgemäßen Behältnisses.

Der Begriff "Behältnis" ist allgemein zu verstehen und umfasst jede Anordnung, die wenigstens einen Innenraum aufweist, der beheizt oder gekühlt ist. In einer bevorzugten Ausgestaltung der Erfindung wird unter einem "Behältnis" ein Kühl- und/oder Gefriergerät verstanden. Vorzugsweise weist dieses Gerät keinen herkömmlichen Kältemittelkreislauf auf, sondern weist als Quelle. zur Kälteerzeugung ausschließlich das Peltierelement oder ein sonstiges thermoelektrisches Element auf.

Erfindungsgemäß ist vorgesehen, dass es sich bei dem erfindungsgemäßen Behältnis um ein Kühl- und/oder Gefriergerät, insbesondere um ein Haushaltsgerät bzw. ein gewerbliches Kühlgerät handelt. Beispielsweise sind solche Geräte umfasst, die für eine stationäre Anordnung im Haushalt, in einem Hotelzimmer, in einer gewerblichen Küche oder in einer Bar konzipiert sind. Beispielsweise kann es sich auch um einen Weinkühlschrank handeln. Ferner sind auch Kühl- und/oder Gefriertruhen von der Erfindung umfasst. Die erfindungsgemäßen Geräte können eine Schnittstelle zur Anbindung an eine Stromversorgung, insbesondere an ein Haushaltsstromnetz (z.B. einen Stecker) und/oder eine Steh- oder Einbauhilfe wie beispielsweise Stellfüße oder Schnittstelle zur Fixierung innerhalb einer Möbelnische aufweisen. Beispielsweise kann es sich bei dem Gerät um ein Einbaugerät oder auch um ein Standgerät handeln.

In einer Ausführungsform ist das das Gerät derart ausgebildet, dass es mit einer Wechselspannung, wie beispielsweise mit einer Hausnetzspannung von z.B. 120 V und 60 Hz oder 230 V und 50 Hz betrieben werden kann. In einer alternativen Ausführungsform ist das das Gerät derart ausgebildet, dass es mit Gleichstrom einer Spannung von beispielsweise 5 V, 12 V oder 24 V betrieben werden kann. In dieser Ausgestaltung kann vorgesehen sein, dass innerhalb oder außerhalb des Gerätes ein Steckernetzteil vorgesehen ist, über welches das Gerät betrieben wird. Ein Vorteil der Verwendung von thermoelektrischen Wärmepumpen ist in dieser Ausführungsform, dass die komplette EMV-Problematik lediglich am Netzteil auftritt.

Insbesondere kann vorgesehen sein, dass das Kühl- und/oder Gefriergerät eine schrankartige Gestalt hat und einen Nutzraum aufweist, der an seiner Vorderseite (im Falle einer Truhe an der Oberseite) für einen Benutzer zugänglich ist. Der Nutzraum kann in mehrere Kompartimente unterteilt sein, die alle bei derselben oder bei unterschiedlichen Temperaturen betrieben werden. Alternativ kann lediglich ein Kompartiment vorgesehen sein. Innerhalb des Nutzraumes bzw. eines Kompartiments können auch Lagerungshilfen wie beispielsweise Ablagefächer, Schubladen oder Flaschenhalter (im Falle einer Truhe auch Raumteiler) vorgesehen sein, um eine optimale Lagerung von Kühl- oder Gefriergütern und eine optimale Platzausnützung zu gewährleisten.

Der Nutzraum kann durch wenigstens eine um eine vertikale Achse schwenkbare Türe verschlossen sein. Im Falle einer Truhe ist eine um eine horizontale Achse schwenkbare Klappe oder ein Schiebedeckel als Verschlusselement denkbar. Die Türe oder ein sonstiges Verschlusselement kann im geschlossenen Zustand anhand einer umlaufenden Magnetdichtung mit dem Korpus im Wesentlichen luftdicht in Verbindung stehen. Vorzugsweise ist auch die Türe bzw. ein sonstiges Verschlusselement wärmeisoliert, wobei die Wärmeisolierung anhand einer Ausschäumung und ggf. anhand von Vakuumisolationspaneelen erreicht werden kann, oder auch vorzugsweise anhand eines Vakuumsystems und besonders bevorzugt anhand eines Vollvakuumsystems. An der Innenseite der Türe können ggf. Türabsteller vorgesehen sein, um auch dort Kühlgüter lagern zu können.

In einer Ausführungsform kann es sich um ein Kleingerät handeln. In derartigen Geräten weist der Nutzraum, der durch die Innenwand des Behälters definiert ist, beispielsweise ein Volumen von kleiner 0,5 m³, kleiner 0,4 m³ oder kleiner 0,3 m³ auf.

Die Außenabmessungen des Gerätes liegen vorzugsweise im Bereich bis 1 m hinsichtlich der Höhe, der Breite und der Tiefe.

Die Festkörper 10, 12 bestehen vorzugsweise aus Aluminium.

Mit dem Bezugszeichen 20 sind Verbindungselemente gekennzeichnet, die das mindestens eine thermoelektrische Element mit den wärmeleitenden Festkörpern 10, 12 mechanisch fest verspannt.

Vorzugsweise erfolgt die Verspannung durch eine Klemmverbindung. Das wenig wärmeleitende Element bzw. das oder die Verbindungselemente 20 verspannt die beiden Festkörper 10, 12 über eine Klemmverbindung.

Die Verbindungselemente 20 bilden eine nicht oder wenig wärmeleitende Befestigung der beiden Festkörper 10, 12 aneinander. Die Verbindungselemente 20 fixierten den Abstand der Festkörper 10, 12 zueinander.

Der Abstand der Verbindungselemente 20 zu dem thermoelektrischen Element wird möglichst groß gewählt. In dem hier gezeigten Ausführungsbeispiel ist der Abstand eines der Verbindungelemente 20 zu dem thermoelektrischen Element größer als dessen Kantenlänge.

Grundsätzlich kann genau ein Verbindungselement 20 vorgesehen sein. Auch der Einsatz von mehr als einem Verbindungelement 20 ist denkbar und von der Erfindung mit umfasst.

In dem Ausführungsbeispiel befinden sich die vier Verbindungselemente 20 in den Eckbereichen der Festkörper 10, 12. Sie sind alle genausoweit von dem thermoelektrischen Element entfernt.

Der aus den Formkörpern 10, 12 bestehende primäre Wärmetauscher bietet eine sehr gute thermische Ankopplung der erzeugten Kälte bzw. Wärme des thermoelektrischen Elementes. Aufgrund der sich ausgehend von dem thermoelektrischen Element vergrößernden Querschnittsfläche wird der Wärmestrom auf eine größere Fläche gebracht, so dass bei einer Ankopplung an ein weiteres Element, wie z.B. an einen weiteren wärmeleitenden Festkörper ein möglichst geringer Wärmeverlust entsteht.

Nach der Erfindung ist das thermoelektrische Element zwischen den Formkörpern 10, 12 verspannt, ohne dass durch das oder die Verbindungselemente eine signifikante Wärmebrücke entsteht.

Die Formkörper 10, 12 sind Aluminiumkörper, die auf dem thermoelektrischen Element aufsitzen.

Wie dies aus der Figur hervorgeht, werden die Formkörper über Kunststoffverbindungen mit geringer bzw. mit geringerer Wärmeleitfähigkeit verspannt.

Denkbar ist es, als Verbindungselement oder als Verbindungselemente Schrauben einzusetzen.

Auch ist es möglich, als Verbindungselement oder als Verbindungselemente ein Teil, wie z.B. ein Spritzgussteil zu verwenden, das an einem der Formteile 10, 12 befestigt ist und bei der Montage an dem anderen der Formteile einrastet.

Da Kunststoffverbinder und auch andere Verbindungselemente Wärmebrücken darstellen, wird für diese ein möglichst geringer Querschnitt verwendet, wodurch andererseits der konstruktive Halt reduziert wird. Da die kritischsten Belastungen Verformungen am Gesamtgerät sind, die über den steifen primären Wärmetauscher, d.h. über die Formteile 10, 12 auf das thermoelektrische Element übertragen werden, ist eine Stabilisierung - wie aus der Figur ersichtlich - an allen Seiten und möglichst weit weg bzw. außerhalb des thermoelektrischen Elementes bevorzugt.

## Patentansprüche

1. Kühl- und/oder Gefriergerät mit einem Innenraum und einem Peltier-Element zur Kälteerzeugung in dem Innenraum, wobei das Peltier-Element zwischen zwei wärmeleitenden Festkörpern (10, 12) angeordnet ist, die mit zunehmendem Abstand zu dem Peltier-Element eine zunehmende Querschnittsfläche aufweisen, wobei die beiden Festkörper (10, 12) durch ein oder mehrere Verbindungsmittel (20) miteinander verbunden sind, die eine geringere Wärmeleitfähigkeit als die Festkörper (10, 12) aufweisen,
**dadurch gekennzeichnet,**
**dass** das Kühl- und/oder Gefriergerät als Wärmedämmung des Innenraums eine Vakuumdämmung aufweist und das Peltier-Element und beide Festkörper (10, 12) in der Dämmschicht angeordnet sind, wobei das Peltier-Element zwischen den Festkörpern (10, 12) mithilfe von dem einen oder von den mehreren Verbindungsmitteln (20) verspannt ist, wobei die Verbindungsmittel (20) aus Kunststoff bestehen.

2. Kühl- und/oder Gefriergerät nach Anspruch 1, **dadurch gekennzeichnet, dass** einer der Festkörper (10, 12) wärmeleitend mit einer Außenhaut des Gerätes und einer der Festkörper (10, 12) wärmeleitend mit einer Innenwand des Gerätes in Verbindung steht.

3. Kühl- und/oder Gefriergerät nach einem der vorhergehenden Ansprüche, **dadurch gekennzeichnet, dass** die Vakuumdämmung den gekühlten Innenraum vollständig umgibt.

4. Kühl- und/oder Gefriergerät nach einem der vorhergehenden Ansprüche, **dadurch gekennzeichnet, dass** das oder die Verbindungsmittel (20) in einem größtmöglichen Abstand zu dem Peltier-Element angeordnet sind.

5. Kühl- und/oder Gefriergerät nach einem der vorhergehenden Ansprüche, **dadurch gekennzeichnet, dass** die beiden Festkörper (10, 12) durch mehrere Verbindungsmittel (20) miteinander verbunden sind und alle diese Verbindungsmittel (20) denselben Abstand zu dem Peltier-Element aufweisen.

6. Kühl- und/oder Gefriergerät nach einem der vorhergehenden Ansprüche, **dadurch gekennzeichnet, dass** der Abstand des Verbindungsmittels (20) oder die Abstände der Verbindungsmittel (20) zu dem Peltier-Element größer als die Kantenlänge des Peltier-Elementes ist bzw. sind.

7. Kühl- und/oder Gefriergerät nach einem der vorhergehenden Ansprüche, **dadurch gekennzeichnet, dass** die Festkörper (10, 12) aus Metall und vorzugsweise aus Aluminium bestehen.

## Claims

1. Refrigerator unit and/or a freezer unit having an inner space and a Peltier element for generating cold in the inner space, wherein the Peltier element is arranged between two thermo-conductive solid bodies (10, 12) which have an increasing cross-sectional area as the spacing from the Peltier element increases, wherein the two solid bodies (10, 12) are connected to one another by one or multiple connection means (20) that have a smaller thermal conductivity than the solid bodies (10, 12),
**characterized in that**
the refrigerator unit and/or freezer unit comprises a vacuum insulation as the thermal insulation of the inner space, and the Peltier element and both of the two solid bodies (10, 12) are arranged in the insulation layer, wherein the Peltier element is clamped between the solid bodies (10, 12) using the one or more connection means (20), wherein the connection means (20) consist of plastic material.

2. Refrigerator unit and/or a freezer unit according to claim 1, **characterized in that** one of the solid bodies (10, 12) is thermo-conductively connected to the outer skin of the unit and one of the solid bodies (10, 12) is thermo-conductively connected to the inner wall of the unit.

3. Refrigerator unit and/or a freezer unit according to any one of the preceding claims, **characterized in that** the vacuum insulation completely surrounds the inner space.

4. Refrigerator unit and/or a freezer unit according to any one of the preceding claims, **characterized in that** the single connection means or plurality of connection means (20) is/are arranged at a spacing from the Peltier element which is as large as possible.

5. Refrigerator unit and/or a freezer unit according to any one of the preceding claims, **characterized in that** the two solid bodies (10, 12) are connected to one another by multiple connection means (20) and all of these connection means (20) have the same spacing from the Peltier element.

6. Refrigerator unit and/or a freezer unit according to any one of the preceding claims, **characterized in that** the spacing of the single connection means (20) or plurality of connection means (20) from the Peltier element is larger than the edge length of the Peltier element.

7. Refrigerator unit and/or a freezer unit according to any one of the preceding claims, **characterized in that** the solid bodies (10, 12) consist of metal and preferably of aluminum.

## Revendications

1. Appareil de réfrigération et/ou de congélation avec un espace intérieur et un élément Peltier pour générer du froid dans l'espace intérieur, dans lequel l'élément Peltier est disposé entre deux corps solides (10, 12) thermoconducteurs, qui présentent, avec une distance croissante par rapport à l'élément Peltier, une surface de section transversale croissante, dans lequel les deux corps solides (10, 12) sont reliés l'un à l'autre par un ou plusieurs moyens de liaison (20) qui présentent une conductivité thermique inférieure aux corps solides (10, 12),
**caractérisé en ce que**
l'appareil de réfrigération et/ou de congélation présente en tant qu'isolation thermique de l'espace intérieur une isolation sous vide, et l'élément Peltier et les deux corps solides (10, 12) sont disposés dans la couche isolante, dans lequel l'élément Peltier est assemblé par serrage entre les corps solides (10, 12) à l'aide du ou des plusieurs moyens de liaison (20), dans lequel les moyens de liaison (20) sont constitués de matière plastique.

2. Appareil de réfrigération et/ou de congélation selon la revendication 1, **caractérisé en ce qu'**un des corps solides (10, 12) est en liaison de manière thermoconductrice avec une enveloppe extérieure de l'appareil et un des corps solides (10, 12) est en liaison de manière thermoconductrice avec une paroi intérieure de l'appareil.

3. Appareil de réfrigération et/ou de congélation selon l'une quelconque des revendications précédentes, **caractérisé en ce que** l'isolation sous vide entoure en totalité l'espace intérieur réfrigéré.

4. Appareil de réfrigération et/ou de congélation selon l'une quelconque des revendications précédentes, **caractérisé en ce que** le ou les moyens de liaison (20) sont disposés à une distance aussi grande que possible par rapport à l'élément Peltier.

5. Appareil de réfrigération et/ou de congélation selon l'une quelconque des revendications précédentes, **caractérisé en ce que** les deux corps solides (10, 12) sont reliés l'un à l'autre par plusieurs moyens de liaison (20) et tous ces moyens de liaison (20) présentent la même distance par rapport à l'élément Peltier.

6. Appareil de réfrigération et/ou de congélation selon l'une quelconque des revendications précédentes, **caractérisé en ce que** la distance du moyen de liaison (20) ou les distances des moyens de liaison (20) par rapport à l'élément Peltier est supérieure ou sont supérieures à la longueur d'arête de l'élément Peltier.

7. Appareil de réfrigération et/ou de congélation selon l'une quelconque des revendications précédentes, **caractérisé en ce que** les corps solides (10, 12) sont constitués de métal et de préférence d'aluminium.
